# EUROPEAN PATENT SPECIFICATION

(11) **EP 0 204 507 B1**
(45) Date of publication and mention of the grant of the patent: **03.11.1993**
(21) Application number: 86304062.2
(22) Date of filing: 28.05.1986
(51) Int. Cl.: G06F 12/06, G06F 11/00

(54) **System configuration tracing method and apparatus**
Verfahren und Vorrichtung zum Protokollieren von Systemkonfigurationen
Procédé et appareil de retraçage de configuration de systèmes

(30) Priority: 03.06.1985 US 740094
(43) Date of publication of application: 10.12.1986
(73) Proprietor: International Business Machines Corporation, Armonk, N.Y. 10504 (US)
(72) Inventor: Buckley, James Francis, Hyde Park New York 12538 (US); Keeney, Garrison Quay, Raleigh North Carolina 27612 (US); Morrison, Richard Martin, Cary North Carolina 27511 (US); Stember, Michael Joseph, Kingston New York 12401 (US); Wendell, Edward Joseph, Woodstock New York 12498 (US)
(74) Representative: Burt, Roger James, Dr.

(56) References cited:
- US-A- 4 442 502
- US-A- 4 514 806
- IBM TECHNICAL DISCLOSURE BULLETIN, vol. 24, no. 5, October 1981, pages 2378-2380, New York, US; D.A. HUERTA: "Configurable workstation controller using small number of different adapter cards"
- PATENT ABSTRACTS OF JAPAN, vol. 6, no. 104 (P-122)[982], 15th June 1982; & JP-A-57 36 340 (FUJITSU K.K.) 27-02-1982
- PATENT ABSTRACTS OF JAPAN, vol. 6, no. 198 (P-147)[1076], 7th October 1982; & JP-A-57 106 932 (FUJITSU K.K.) 03-07-1982

## Description

The present invention relates to data processing systems capable of supporting a multi-tier multiplex terminal device array and having an arrangement to aid in set-up by the user, including means for the system to analyse its own device path configuration.

Methods to detect module population in a data processing system for various purposes are well-known, see for example the test module determination of US-A-4 488 299. Examples are seen wherein memory modules of various sizes are queried for assigning addresses in a system address space. Other arrangements are known for identifying and testing individual modules in a system. Frequently these modules are in the form of cards plugged into sockets of a buss system, and in some cases, the user has the option of plugging various cards into sockets of the system more or less at random.

It is also well-known to perform wrap tests on transmission lines whereby, the problem solved by the test method, is relatively simple, e.g. the question of whether there is a working device at the other end of the transmission line.

There exists a need to perform system analysis in more complex multi-terminal systems. Such systems may include a local or remote host processor, a terminal cluster control processor, and terminal devices connected directly to the latter or through fan-out units which themselves may be native or remote to the cluster control processor. Various control and transmission protocols may exist in corresponding tiers in such a system or even in the same tier, and so systems self-analysis and test becomes a complex problem.

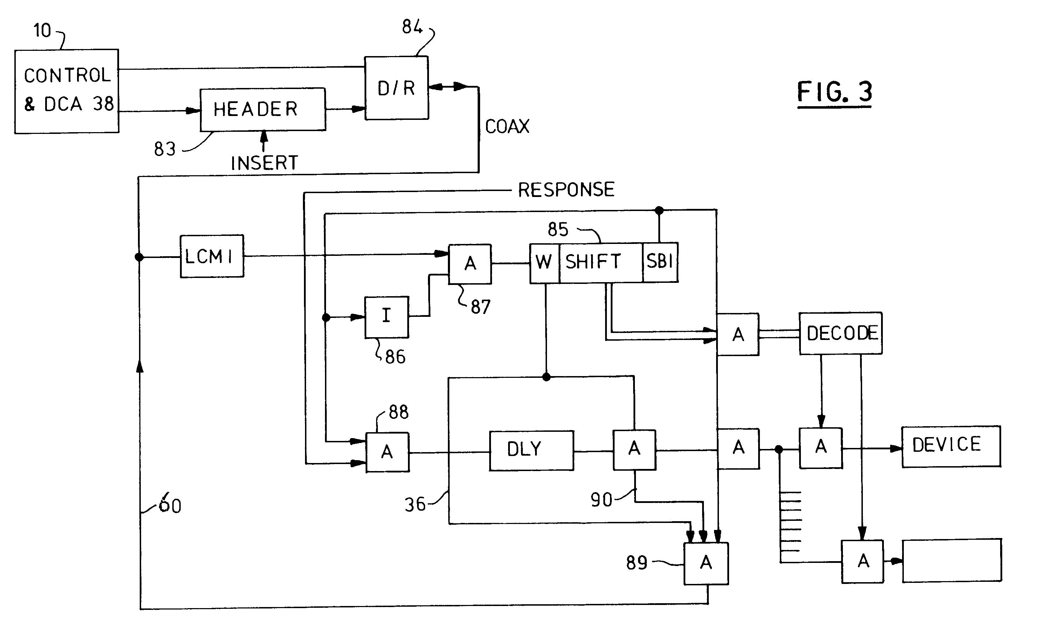

In accordance with the present invention there is now provided a data processing system including a controller, and connected thereto an I/O bus having a plurality of slots into which can be physically and electrically connected any of a variety of cards, some of said cards carrying an adapter to connect into the system a respective single device, and others of said cards carrying an adapter to connect into the system, via a plurality of ports, up to an equal plurality of devices or multiple device connectors, which devices may themselves be mounted on cards and be connected to the system via others of the slots, wherein, for tracing the current device connections in the system, a tracing arrangement is provided which includes: means in each card for outputting to said controller via an identification bus the identity of the card when interrogated; individual interrogation lines connected to said controller for sequentially interrogating the slots during a first phase to obtain therefrom the current identity of the cards in the slots, if any, said controller compiling, in response to the interrogation, a slot table recording the association of card identity and slot; means in each card having a plurality of ports, after being interrogated, for sequentially issuing a wrap command supplied by said controller via its ports to the devices connected to said card; some of said devices, comprising means (Figure 3) for returning the received wrap command via the card having a plurality of ports to the controller, which concludes that if the wrap command is not returned from a port said port is either connected to a single unit or not connected to a functioning unit; a device connected to one of said plurality of ports which returns the wrap command either comprising means for changing at least one bit in the corresponding identity so indicating that the device is occupying a slot, or not comprising said changing means so indicating that the device is a remote device; said individual interrogation lines sequentially interrogating the slots during a second phase to again obtain thereform the card identities; means in said controller for comparing the newly obtained identities with previously obtained corresponding identities recorded in the slot table and for associating those slots with a corresponding port where a changed identity is detected; so that the controller can determine the currently available paths to devices via slot and port.

In an embodiment of the invention, disclosed hereinafter, in a terminal controller system, one processor card and several feature cards are plugged into slots on a board, and I/O signal cables are connected between cards and/or remote multiplexors or terminals. A special purpose card identification (ID) bus is driven by the feature cards and received by the ID adapter of the processor. The ID adapter has one select line running to each of the slots on the board. The ID adapter enables the select lines one at a time, whereby each selected feature card drives its IDs onto the ID bus. The processor records the slot population by ID and also can analyse the IDs to determine if a valid configuration exists. The processor then performs a wrap test on each of its ports which may be connected to a feature card. This test alters the ID of the card which it wraps and by comparison with the IDs recorded originally, this enables the processor (microcode operated controller) to logically establish the physical link to particular cards connected to the ports.

Looking at another way, there is provided a method of tracing device connections in a data processing system comprising a controller, and connected thereto an I/O bus having a plurality of slots into which can be physically and electrically connected any of a variety of cards, some of said cards carrying an adaptor to connect into the system a single device, and others of said cards carrying an adaptor to connect into the system, via a plurality of devices or multiple device connectors, which devices may themselves be mounted on cards and be connected to the system via others of the slots, the method comprising: sequentially interrogating, during a first phase, the slots via individual interrogation lines connected to the controller to obtain from the slots the current identity of the cards in the slots, if any; compiling, in the controller, a slot table recording the associating of the card identities received in response to the interrogation and the slots; supplying a wrap command from the controller to each card having a plurality of ports; sequentially issuing, from each card having a plurality of ports, the supplied wrap command to the devices connected to said ports; determining, in the controller, that a port is either connected to a single unit or not connected to a functioning unit if the supplied wrap command is not returned to the controller from said port; changing, in a device which returns the supplied wrap command, at least one bit in the corresponding identity if said device is occupying a slot or not changing said at least one bit if said device is a remote device; sequentially interrogating, during a second phase, the slots via the individual interrogation lines to again obtain therefrom the card identities; comparing, in the controller, the newly obtained identities with the previously obtained corresponding identities recorded in the slot table; and determining, in the controller, the currently available paths to devices via slot and port by associating those slots with a corresponding port where a changed identity is detected.

The present invention will be described further by way of example with reference to an embodiment thereof as illustrated in the accompanying drawings in which:
Figure 1 is a diagrammatic representation of one form of terminal system according to the invention;
Figure 2 indicates the general physical structure of a terminal cluster controller forming part of the system of Figure 1;
Figure 3 shows diagrammatically the remote terminal multiplexor unit for connecting a number of terminals in the system of Figure 1 and including a wrap test capability;
Figure 4 shows a card identifier system forming a part of the controller of Figure 2 and operable to ascertain the identity and slot location of cards or modules therein;
Figure 5 depicts a module versus slot table built by the processor of the controller of Figure 2 utilising the slot query system of Figure 4;
Figure 6 shows, schematically, circuit means on a card or modules responsive to a wrap command to alter the ID of the module;
Figure 7 shows an address assignment table correlating ports of the device cluster adapter of Figure 2 with various terminal addresses in the system; and
Figure 8, in segments 8A and 8B, is a flow diagram illustrative of the port, module, and terminal address assignment method of the invention.

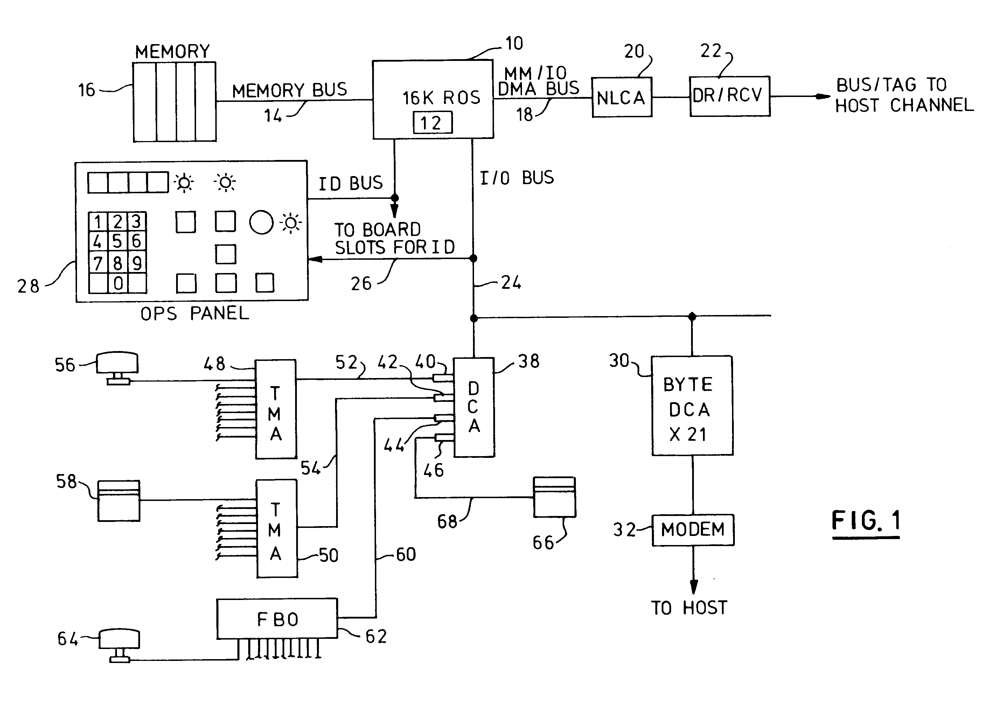

The system of Figure 1 includes an intelligent controller 10 including a micro-processor 12 and native read only storage for its control. The controller 10 has a memory bus 14 connecting to a RAM storage 16 having sufficient volume for the needs of the system. Also included is a memory mapped I/O DMA bus 18 connected via an adapter 20 and a driver/receiver 22 to a host channel.

The controller 10 also has an I/O bus for supporting the terminals connected to it as well as for providing one of the routes 26 of communication to an operator control panel 28. The I/O bus 24 connects to a number of units such as an adapter 30 for a modem 32 connecting to a remote host.

However, the principle adapter connected to the I/O bus 24 is a device cluster adapter 38 having, in the illustrated embodiment four ports 40, 42, 44 and 46. Two of the ports, 40 and 42, are connected to respective terminal mutiplex adapters, 48 and 50, via respective coaxial cables 52, 54 and each of the terminal multiplex adapters 48 and 50 supports a plurality, in the example shown 8, of terminals such as a keyboard display work station 56, a printer 58, and so on. Whereas the data flow on the I/O bus 24 is in parallel, the communication from the device cluster adapter 38 to the terminal multiplex adapters 48 and 50 and thence to the various terminals 56, 58 connected thereto is by serial coax lines. Another of the device cluster adapter ports 44 is shown connected via coaxial cable 60 to a remote fan-out unit 62 which, like the terminal multiplex adapters 48 and 50 can also support a plurality of devices such as the work station indicated at 64. It is pointed out that the only material difference between the adapters 48 and 50 and the fan-out unit 62 is one of respective location. The adapters are locally connected, actually occupying system slots, while the fan-out unit is remotely connected. Still another port 46 of the device cluster adapter 38 connects to a single unit such as a printer 66 via coax 68.

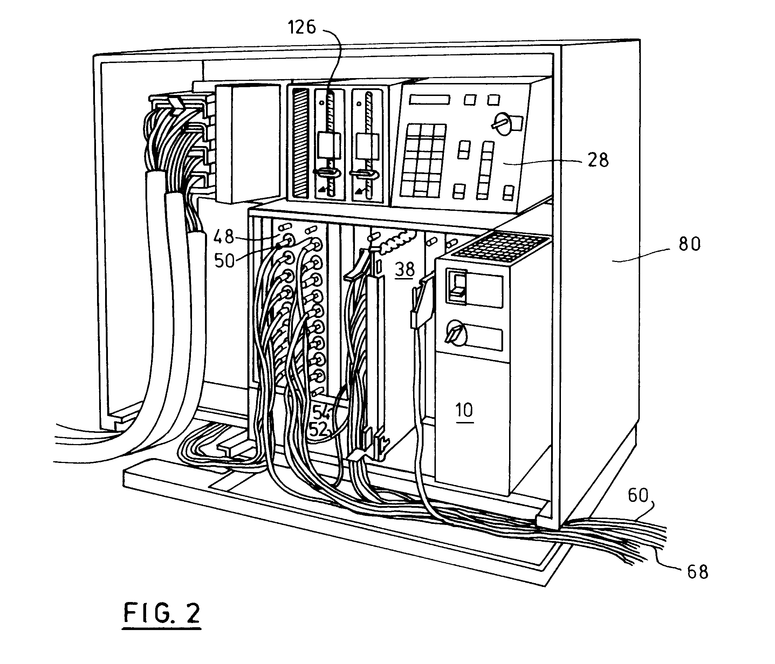

Figure 2 shows an equipment cabinet 80 which houses the native elements of system. A cover panel has been removed to expose these parts which include terminal multiplex adapters 48 and 50 and the device cluster adapter 38 as pluggable modules, the later of which is shown partly withdrawn. Each of the modules plugs into a corresponding socket or slot, but these are user installable parts and may be plugged into any of several sockets. As seen in the drawing, the various cables 52, 54, 60, 68, although draped in an orderly manner, can be intermixed in such fashion that tracing visually would be time consuming, and these cables can also be rearranged by the user. Hence the thrust of the present invention in terms of the described arrangement to provide means to determine what ports of the device cluster adapter 38 are connected to which local and remote units and, indeed the character of those units.

The single coax connection 60 can be used between the device cluster adapter 38 of the controller 10 and the remote fan-out box 62 for a number of data terminal devices, such as keyboard displays, one of which is indicated at 64 and/or printers. The controller inserts a terminal device address on each outbound message which it transmits via the common coax 60. The fan-out box 62 receives the messages from the coax 60 and distributes them to the addressed terminal devices. In the described system all traffic from the terminals to the controller is in direct response to a poll or other command received from the controller and intended for that terminal, and so it is not necessary to provide a terminal identification on such response.

To test the fan-out box 62, it is desirable to be able to send a test message (including a terminal address header) out to the fan-out box and have the fan-out box return it as if it were a response from a terminal. The device cluster adapter 38 inserts advice address preceding the normal message to the device and the fan-out box is provided which strips and decodes the address, selects the proper fan-out port, and, in normal use, relays the normal message to the correct terminal device.

Figure 3 shows, schematically, how this can be done and also how a wrap test can be accomplished. The device cluster adapter 38 inserts a sync bit SB1, device address ADDR and parity bit P1 into shift register means 83 ahead of the usual sync bit SB2, command byte and parity bit P2 destined for the device. The coax driver/receiver 84 inserts line quiescence bits and a starting code waveform. Then SB1, ADDR and P1 are shifted out of the register 83 onto the coax in that order. At the remote fan-out box this signal is received from the coax by a line control module LCM1, and SB1 and the device address are stored. In the simple example shown, this storage is in a shift register 85 and the propogation of the SB 1 to the end of register 85 is used as a signal to mark the end of the added bits which are to be stripped from the message before the remainder is sent on to the addressed device. SB1 is also used, via inverter 86, to decondition AND gate 87, thereby blocking further input from LCM1 to register 85. At the same time, the SB1 signal enables another AND gate 88 by which the remaining portions of the message are routed through an 8-bit delay in the message during which the device address ADDR is used to set up the message routing. For this purpose, the address portion in the address shift register is gated to a decode circuit which, in turn, conditions a single gate (1 out of 8) in the coax leading to the selected device.

In order to provide the desired wrap test, and arrangement is provided which allows the controller to send a diagnostic wrap command to the fan-out box which will, in turn, hold and re-transmit the data portion of the transmission back to the controller. This is done by:
(1) Changing the controller's Driver/Receiver to insert a wrap mode bit W along with the device address.
(2) Adding the logic to the fan-out box which will decode wrap mode, store the outbound transmission, and send the stored transmission back through the fan-out box to the controller.

The wrap bit W is the last bit of the address field stored in the fan-out box register 85. When SB1 is detected, it conditions AND circuit 89. The other two inputs to AND 89 are the wrap bit and the output on line 90. Thus, the output from shift register DLY is retransmitted back to coax 60 as a "response" signal instead of being fed to the addressed device.

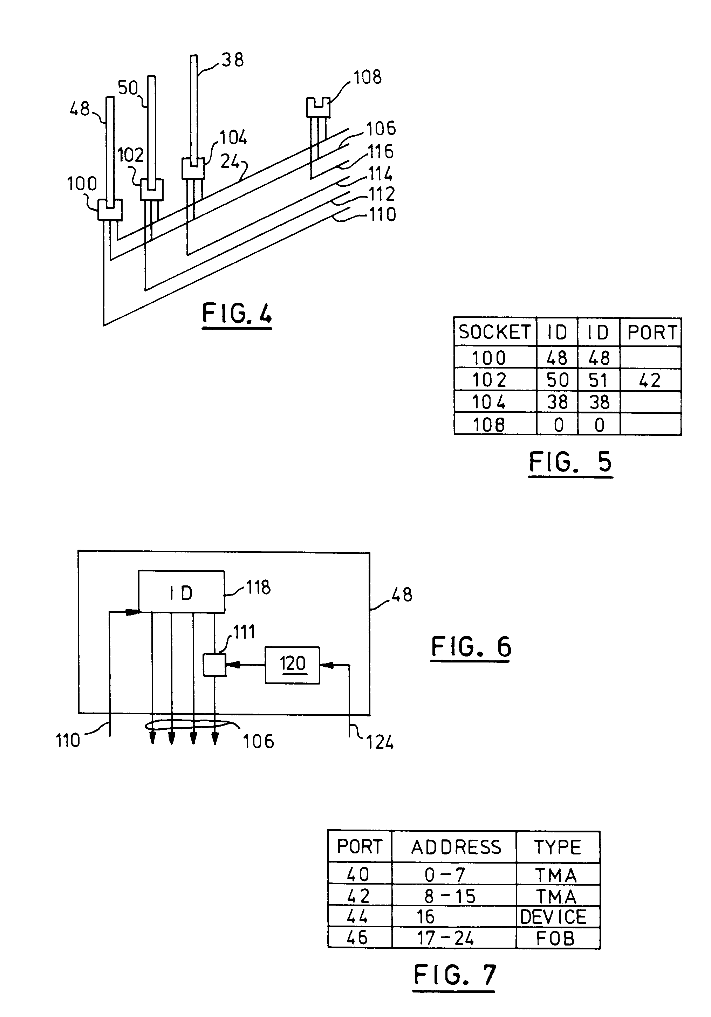

Figure 4 is a skeletal drawing showing the cards or modules 48, 50 and 38 in their respective sockets by which they connected to the I/O bus 24 and identifier (ID) bus 106. To simplify the drawing, the coaxial cables are omitted from this view. The sockets need not all be populated, an unpopulated one being shown at 108, nor do they have to be populated in a particular order. However, each socket 100, 102, 104 and 108 has an individual interrogation line 110, 112, 114 and 116 connected to the processor 10 (Figure 1) by which the processor 10 can query the cards or modules 48, 50, 38 and so on in the respective sockets one at a time, forcing the module to place its ID on the bus ID bus 106. Thus the processor 10 can build a table of slot versus ID number as shown in Figure 5. In that figure, decimal numbers which correspond to the parts in Figure 4 are shown although it will be understood that the IDs will normally be binary numbers, such as 9 bit bytes. These ID numbers can be altered as will be described hereinafter.

When a single wrap test as described with reference to Figure 3 is performed from one of the ports in the device cluster adapter 38 which is connected to a terminal multiplex adapter 48 or 50 which occupy slots 100 and 102, the wrap bit logic 111 and 120 in the adapter card forces a change of a bit in the ID from its ID register. When the cards are again polled by their corresponding interrogation lines 110, 112 it is found that one of the IDs no longer is the same as it was initially. This is represented schematically in Figure 5 by a second column in the table wherein the ID number 50 has been changed to 51. This means that the card plugged into socket 102 is the one which is connected to the device cluster adapter port which issued the wrap command. If no change has occurred in any ID it would mean that the port issuing the wrap command was not connected to a functioning terminal multiplex adapter occupying a slot. If the wrap command was returned but without having caused such an ID change it would mean that it had wrapped a remote fan-out unit such as the unit 62 of Figure 1. If it were not returned at all it would mean that the port was connected to a single unit such as the printer 66 in Figure 1 or not connected to any functioning unit. The latter condition can be tested by a poll to the terminal which, if the terminal were present, should be answered by an appropriate message such as explained for example in US Patent #4,271,479.

Additionally, the wrap test of the terminal multiplex adapter which resulted in the change of the ID from 50 to 51 as shown in the table of Fig. 5 associates the port 42 with the card in socket 102 and the original ID of that card because it is known that the port 42 is the one from which the wrap test signal was issued. If it had been the port 40, then that would be the port which is associated with socket 102 by a cable connection thereto and so on.

It should be understood that the logic on the cards 48, 50 can be variously implemented for the purpose of carrying out the functions of the above described. A simple example is seen in Figure 6 wherein a wrap command from bus 24, communicated by adapter 38 and coax 52, is detected at 120, in a manner similar to the operation of shift register 85 of Fig. 3, to set a latching inverter 122 to change one bit of the output of the ID register 118 fed to the bus 106 upon interrogation via line 110. This latch 122 is reset by any non-wrap command on the connected coax. Of course, the logic could be of any kind appropriate to the technology of the card and does not per se form any part of the invention.

Figure 7 illustrates still another feature of the invention. By performing wrap tests as hereinbefore described, it is possible to build the table shown in Figure 7 in which it has been determined that port 40 being connected to a TMA should be assigned eight addresses, 0-7. The next port 42 having been found to be connected to a single device would be given a single address 16 and port 46 having been found to be attached to a remote fan-out box would be assigned eight addresses 17-24.

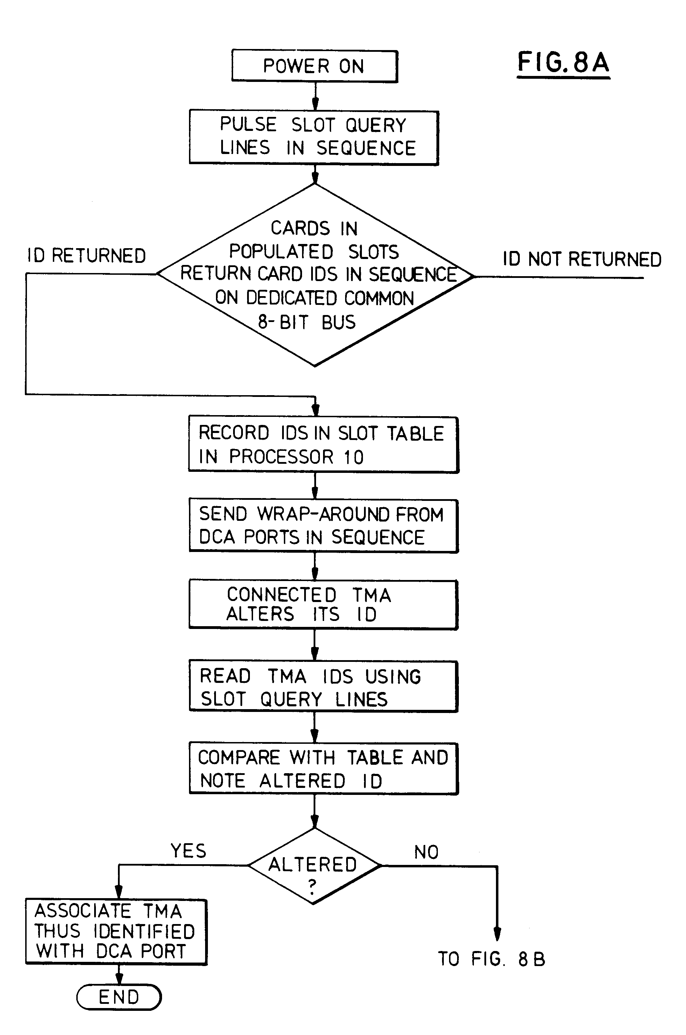

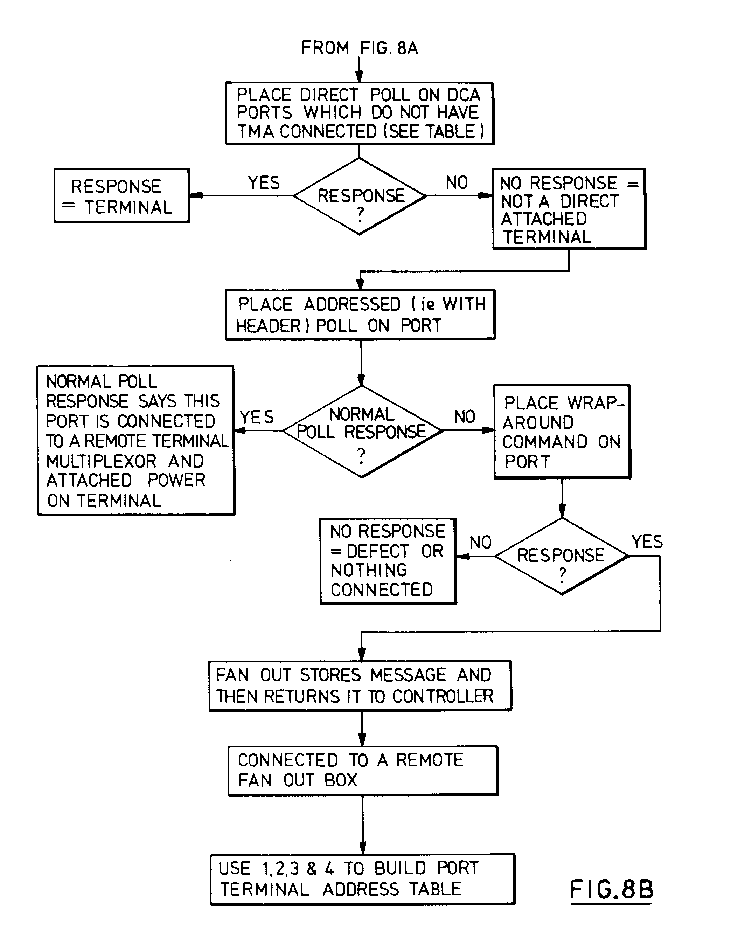

The various described functions with the exception of some hardware functions in the wrap test as above described are most easily carried out by micro-code can be loaded into the processor via a diskette drive 126 as seen in figure 2. Figure 8 shows a flow diagram of the operation of the system under the control of such code, utilising the facilities hereinbefore described.

It will be seen that the method and apparatus of the invention provides a facile means whereby the system can not only diagnose itself but present to the user information as to specific elements which may require replacement. This information can be presented via an indicator device 128 on the operator panel 28, figure 1 or via any suitable display connected to the processor 10. The information presented could, for example, direct the user to the exact failing card in terms of its slot number and type for system maintenance purposes or it could show the address assignment configuration table, etc. the ways in which this information could be made available are many and since it is developed by operation of the system itself it can be presented with minimum effort on the part of the user.

In addition to the use in combination with the testing of the port connections of the device cluster adapter 38, the slot/module ID means and method of the invention can be used throughout the system, for example to identify memory cards in RAM 16.

## Claims

1. A data processing system including a controller (10), and connected thereto an I/O bus (24) having a plurality of slots (100, 102, 104, 108) into which can be physically and electrically connected any of a variety of cards (30, 38, 48, 50), some (30) of said cards carrying an adapter to connect into the system a respective single device (32), and others (38) of said cards carrying an adapter to connect into the system, via a plurality of ports (40, 42, 44, 46), up to an equal plurality of devices (66) or multiple device connectors (48, 50, 62), which devices may themselves be mounted on cards and be connected to the system via others of the slots, wherein, for tracing the current device connections in the system, a tracing arrangement is provided which includes: means (118) in each card for outputting to said controller (10) via an identification bus (106) the identity of the card when interrogated; individual interrogation lines (110, 112, 114, 116) connected to said controller (10) for sequentially interrogating the slots during a first phase to obtain therefrom the current identity of the cards in the slots, if any, said controller compiling, in response to the interrogation, a slot table recording the association of card identity and slot; means in each card (38) having a plurality of ports, after being interrogated, for sequentially issuing a wrap command supplied by said controller (10) via its ports (40, 42, 44, 46) to the devices (48, 50, 62, 66) connected to said card (38); some (48, 50, 62) of said devices (48, 50, 62, 66) comprising means (Figure 3) for returning the received wrap command via the card (38) having a plurality of ports to the controller (10), which concludes that if the wrap command is not returned from a port said port is either connected to a single unit (66) or not connected to a functioning unit; a device (48, 50, 62) connected to one of said plurality of ports which returns the wrap command either comprising means (111, 120) for changing at least one bit in the corresponding identity so indicating that the device (48, 50) is occupying a slot, or not comprising said changing means so indicating that the device is a remote device (66); said individual interrogation lines (110, 112, 114, 116) sequentially interrogating the slots during a second phase to again obtain thereform the card identities; means in said controller (10) for comparing the newly obtained identities with previously obtained corresponding identities recorded in the slot table and for associating those slots with a corresponding port where a changed identity is detected; so that the controller (10) can determine the currently available paths to devices via slot and port.

2. A system as claimed in Claim 1, wherein the interrogating means comprises means to query each slot individually.

3. A system as claimed in Claim 1, wherein the interrogating means comprises a separate conductor arranged in operation to interrogate each card.

4. A system as claimed in any preceding Claim, wherein a dedicated ID bus (106) is coupled in common to all the slots for receiving the outputted card identities.

5. A system as claimed in any preceding Claim, wherein each multiple device connector includes means (89, 90) for returning to its connecting port at least part of an issued wrap command directed thereto.

6. A method of tracing device connections in a data processing system comprising a controller (10), and connected thereto an I/O bus (24) having a plurality of slots (100, 102, 104, 108) into which can be physically and electrically connected any of a variety of cards (30, 38, 48, 50), some (30) of said cards carrying an adaptor to connect into the system a single device (32), and others (38) of said cards carrying an adaptor to connect into the system, via a plurality of devices (66) or multiple device connectors (48, 50, 62), which devices may themselves be mounted on cards and be connected to the system via others of the slots, the method comprising: sequentially interrogating, during a first phase, the slots via individual interrogation lines (100, 112, 114, 116) connected to the controller to obtain from the slots the current identity of the cards in the slots, if any; compiling, in the controller, a slot table recording the associating of the card identities received in response to the interrogation and the slots; supplying a wrap command from the controller to each card having a plurality of ports; sequentially issuing, from each card having a plurality of ports, the supplied wrap command to the devices connected to said ports; determining, in the controller, that a port is either connected to a single unit (66) or not connected to a functioning unit if the supplied wrap command is not returned to the controller from said port; changing, in a device (48, 50, 62) which returns the supplied wrap command, at least one bit in the corresponding identity if said device (48, 50) is occupying a slot or not changing said at least one bit if said device is a remote device (62); sequentially interrogating, during a second phase, the slots via the individual interrogation lines to again obtain therefrom the card identities; comparing, in the controller, the newly obtained identities with the previously obtained corresponding identities recorded in the slot table; and determining, in the controller, the currently available paths to devices via slot and port by associating those slots with a corresponding port where a changed identity is detected.

7. The method of Claim 6 wherein said wrap-around command is sent via an individual serial bit communication cable to each card.

8. The method of Claim 6 or Claim 7, wherein said command includes a wrap bit but is otherwise like a command to a terminal.

9. The method of any one of Claims 6, 7 or 8, further comprising assigning terminal addresses to ports in the system according to whether or not said wrap-around command from a given port results in the change of a card ID.

## Patentansprüche

1. Ein Datenverarbeitungssystem vorgesehen, das eine Steuereinheit (10) enthält, welche mit einem E/A Bus (24) verbunden ist, der eine Vielzahl von Einbauplätzen (100, 102, 104, 108) hat, in die physikalisch und elektrisch jede der vielen Karten (30, 38, 48, 50) angeschlossen werden können, wobei einige (30) der Karten einen Adapter zum Anschluß an das System einer entsprechenden einzelnen Einheit (32) haben und andere (38) der Karten einen Adapter haben, um diesen über eine Vielzahl von Ausgängen (40, 42, 44, 46) mit maximal einer gleichen Anzahl von Einheiten (66) oder mit Anschlüßen (48, 50, 62) mehrerer Geräte zu verbinden, deren Einheiten ihrerseits auf Karten montiert sind und die über andere Einbauplätze mit dem System verbunden werden können, wobei zum Protokollieren der aktuellen Geräteverbindungen in dem System eine Protokollanordnung vorgesehen ist, in der enthalten sind: Mittel (118) in jeder Karte, um auf Abfrage die Kartenidentität über einen Identifizierungsbus (106) an die Steuereinheit (10) auszugeben; einzelne Abfrageleitungen (110, 112, 114, 116) die mit der Steuereinheit (10) für aufeinanderfolgende Abfrage der Einbauplätze während einer ersten Phase verbunden sind, um von dort die aktuelle Identität der Karten in den Einbauplätzen zu erhalten, wenn irgendeine die Steuereinheit kompiliert, wobei als Reaktion auf die Abfrage der Kartenidentiät eine Einbauplatztabelle die Zuordnung Kartenidentität zu Einbauplatz aufnimmt; Mittel in jeder Karte (38) mit einer Vielzahl von Ausgängen, die nach erfolgter Abfrage nacheinander einen Verknüpfungsbefehl ausgeben, der von der Steuereinheit (10) über deren Ausgänge (40, 42, 44, 46) an die an diese Karte (38) angeschlossenen Einheiten (48, 50, 62, 66) geliefert wird; einige (48, 50, 62) der Einheiten (48, 50, 62, 66) Mittel (Figur 3) enthalten, um den empfangenen Verknüpfungsbefehl über die Karte (38) zurückzuführen, die eine Vielzahl von Ausgängen zu der Steuereinheit (10) aufweist und die beschließt, daß, falls der Verknüpfungsbefehl nicht von einem Ausgang zurückgeführt wird, dieser Ausgang weder an eine einzelne Einheit (66) noch an eine funktionierende Einheit angeschlossen wurde; eine Einheit (48, 50, 62), die an eine der vielen Ausgänge angeschlossen ist, die den Verknüpfungsbefehl zurückführt, die entweder Mittel (111, 120) enthält, um wenigstens ein Bit in der entsprechenden Identität zu verändern und somit anzugeben, daß die Einheit (48, 50) einen Einbauplatz belegt oder die keine derartigen Veränderungsmittel enthält und somit anzugeben, daß die Einheit eine entfernt stehende Einheit (66) ist; die einzelnen Abfrageleitungen (110, 112, 114, 116) zur aufeinanderfolgenden Abfrage der Einbauplätze während einer zweiten Phase, um so wiederum die Kartenidentitäten zu erhalten; Mittel in der Steuereinheit (10) zum Vergleich der neu erhaltenen Identitäten mit zuvor erhaltenen, entsprechenden Identitäten, die in der Einbauplatztabelle aufgenommen werden, damit diese Einbauplätze einem entsprechenden Ausgang zugeordnet werden können, wo eine geänderte Identität ermittelt wird; so daß die Steuereinheit (10) die aktuell verfügbaren Pfade zu den Einheiten über Einbauplatz und Ausgang bestimmen kann.

2. Ein System wie in Anspruch 1, wobei die Abfragemittel Mittel enthalten, mit denen jeder Einbauplatz einzeln abgefragt werden kann.

3. Ein System wie in Anspruch 1, wobei die Abfragemittel einen separaten Leiter enthalten, der funktionell angeordnet ist, um jede Karte abzufragen.

4. Ein System wie in einem der vorhergehenden Ansprüche, wobei ein bestimmter ID Bus (106) mit allen Einbauplätzen gekoppelt ist, um die ausgegebenen Kartenidentitäten zu empfangen.

5. Ein System wie in einem der vorhergehenden Ansprüche, wobei jeder Anschluß für mehrere Geräte Mittel (89, 90) enthält, um an den an ihn angeschlossenen Ausgang einen ausgegebenen Verknüpfungsbefehl teilweise zurückzugeben, der zu diesem gesteuert wurde.

6. Ein Verfahren zur Protokollierung von Geräteverbindungen in einem Datenverarbeitungssystem, das eine Steuereinheit (10) enthält, welche mit einem E/A Bus (24) verbunden ist, der eine Vielzahl von Einbauplätzen (100, 102, 104, 108) hat, in die physikalisch und elektrisch jede der vielen Karten (30, 38, 48, 50) angeschlossen werden können, wobei einige (30) der Karten einen Adapter zum Anschluß an das System einer entsprechenden einzelnen Einheit (32) haben und andere (38) der Karten einen Adapter haben, um diesen über eine Vielzahl von Einheiten (66) oder über Anschlüße (48, 50, 62) mehrerer Geräte an das System anzuschließen, deren Einheiten ihrerseits auf Karten montiert sind und die über andere Einbauplätze mit dem System verbunden werden können, wobei das Verfahren enthält: aufeinanderfolgende Abfrage der Einbauplätze während einer ersten Phase über einzelne Abfrageleitungen (100, 112, 114, 116), die an die Steuereinheit angeschlossen sind, um um von den Einbauplätzen die aktuelle Identität der Karten in den Einbauplätzen zu erhalten, wenn irgendeine die Steuereinheit kompiliert, wobei als Reaktion auf die Abfrage eine Einbauplatztabelle die Zuordnung Kartenidentität zu Einbauplatz aufnimmt; Lieferung eines Verknüpfungsbefehls von der Steuereinheit an jede Karte mit einer Vielzahl von Ausgängen, die nacheinander von jeder Karte mit einer Vielzahl von Ausgängen den Verknüpfungsbefehl an die Einheiten ausgeben, die an die Ausgänge angeschlossen sind; Bestimmung in der Steuereinheit, daß ein Ausgang weder an eine einzelne Einheit (66) noch an eine funktionierende Einheit angeschlossen wurde, falls der gelieferte Verknüpfungsbefehl von dem Ausgang nicht an die Steuereinheit zurückgeführt wurde; Wechsel in einer Einheit (48, 50, 62), die den gelieferten Verknüpfungsbefehl zurückführt, von wenigstens einem Bit in der entsprechenden Identität, wenn die Einheit (48, 50) einen Einbauplatz belegt oder nicht wenigstens einen Bit gewechselt hat, wenn die Einheit eine entfernt stehende Einheit (62) ist; aufeinanderfolgende Abfrage der Einbauplätze während einer zweiten Phase über die einzelnen Abfrageleitungen, um so wiederum die Kartenidentitäten zu erhalten; Vergleich der neu erhaltenen Identitäten in der Steuereinheit mit zuvor erhaltenen, entsprechenden Identitäten, die in die Einbauplatztabelle aufgenommen werden und Bestimmung der aktuell verfügbaren Pfade in den Einheiten über den Einbauplatz und den Ausgang durch Zuordnung dieser Einbauplätze zu einem entsprechenden Ausgang, wo eine geänderte Identität ermittelt wurde.

7. Das Verfahren aus Anspruch 6, wobei der Verknüpfungsbefehl über ein einzelnes, serielles Bitkommunikationskabel an jede Karte gesendet wird.

8. Das Verfahren von Anspruch 6 oder 7, wobei der Befehl ein Verknüpfungsbit enthält, jedoch andererseits wie ein Befehl an ein Endgerät ist.

9. Das Verfahren von einem der Ansprüche 6, 7 oder 8, das desweiteren zugewiesene Endgeräte-Adressen an Ausgänge in dem System enthält, je nachdem, ob der Verknüpfungsbefehl von einem gegebenen Ausgang in dem Wechsel einer Kartenidentität resultiert.

## Revendications

1. Un système de traitement de données comprenant un contrôleur (10), et connecté à ce dernier un bus E/S (24) comportant une pluralité de fentes (100, 102, 104, 108) dans lesquelles peuvent être physiquement et électriquement connectées n'importe lesquelles de diverses cartes (30, 38, 48, 50), certaines (30) desdites cartes comportant un adaptateur pour connecter dans le système, un seul dispositif respectif (32), et d'autres (38) desdites cartes comportant un adaptateur pour connecter dans le système, par l'intermédiaire d'une pluralité de ports (40, 42, 44, 46), jusqu'à une pluralité égale de dispositifs (66) ou de connecteurs de dispositifs multiples (48, 50, 62), lesquels dispositifs peuvent eux-mêmes être montés sur des cartes et être connectés au système par l'intermédiaire d'autres fentes, dans lequel, pour retracer les connexions courantes des dispositifs dans le système, on a prévu un agencement de retraçage qui comprend: des moyens (118) dans chaque carte pour délivrer en sortie audit contrôleur (10) par l'intermédiaire d'un bus d'identification (106), l'identité de la carte en cas d'interrogation, des lignes d'interrogation individuelles (110, 112, 114, 116) connectées audit contrôleur (10) pour interroger séquentiellement les fentes pendant une première phase pour obtenir de celles ci l'identité courante des cartes dans les fentes, s'il y en a, ledit contrôleur compilant, en réponse à l'interrogation, une table de fentes enregistrant l'association de l'identité de la carte et de la fente, des moyens dans chaque carte (38) ayant une pluralité de ports pour délivrer séquentiellement, après interrogation, un ordre d'enroulement produit par ledit contrôleur (10) par l'intermédiaire de ses ports (40, 42, 44, 46) aux dispositifs (48, 50, 62, 66) connectés à ladite carte (38), certains (48, 50, 62) desdits dispositifs (48, 50, 62, 66) comprenant des moyens (figure 3) pour renvoyer l'ordre d'enroulement reçu par l'intermédiaire de la carte (38), ayant une pluralité de ports connectés au contrôleur (10), qui conclut que si l'ordre d'enroulement n'est pas renvoyé depuis un port, ledit port est soit connecté à une seule unité (66), soit non connecté à une unité en fonctionnement, un dispositif (48, 50, 62) connecté à l'un de ladite pluralité de ports qui renvoit l'ordre d'enroulement comprenant soit des moyens (111, 120) pour changer au moins un bit dans l'identité correspondante, indiquant ainsi que le dispositif (48, 50) occupe une fente, ou ne comprenant pas lesdits moyens de changement, indiquant ainsi que le dispositif est un dispositif à distance (66), lesdites lignes d'interrogation individuelles (110, 112, 114, 116) interrogeant séquentiellement les fentes pendant une seconde phase pour obtenir à nouveau de celles ci, les identités des cartes, des moyens dans ledit contrôleur (10) pour comparer les identités nouvellement obtenues aux identités correspondantes précédemment obtenues, enregistrées dans la table de fentes et pour associer ces fentes avec un port correspondant où une identité modifiée est détectée, de façon que le contrôleur (10) puisse déterminer les chemins couramment disponibles aux dispositifs par la fente et le port.

2. Un système selon la revendication 1 dans lequel les moyens d'interrogation comprennent des moyens pour questionner chaque fente individuellement.

3. Un système selon la revendication 1 dans lequel les moyens d'interrogation comprennent un conducteur séparé agencé en fonctionnement pour interroger chaque carte.

4. Un système selon l'une quelconque des revendications précédentes dans lequel un bus d'indication ID attribuée (106) est couplé en commun à toutes les fentes pour recevoir les identités de cartes délivrées en sortie.

5. Un système selon l'une quelconque des revendications précédentes dans lequel chaque connecteur de dispositif multiple comprend des moyens (89, 90) pour renvoyer à son port de connexion au moins une partie d'un ordre d'enroulement délivré dirigé vers celui ci.

6. Un procédé de retraçage de connexions de dispositifs dans un système de traitement de données comprenant un contrôleur (10), et connecté à celui ci, un bus E/S (24) ayant une pluralité de fentes (100, 102, 104, 108) dans lesquelles peuvent être physiquement et électriquement connectées n'importe lesquelles de diverses cartes (30, 38, 48, 50), certaines (30) desdites cartes comportant un adaptateur pour connecter dans le système un dispositif unique (32), et d'autres (38) desdites cartes comportant un adaptateur pour connecter dans le système une pluralité de dispositifs (66) ou de connecteurs de dispositifs multiples (48, 50, 62), lesquels dispositifs peuvent être eux-mêmes montés sur des cartes et être connectés au système par l'intermédiaire d'autres fentes, le procédé comprenant les étapes suivantes: l'interrogation séquentielle pendant une première phase, des fentes par l'intermédiaire de lignes d'interrogation individuelles (100, 112, 114, 116) connectées au contrôleur pour obtenir depuis les fentes, l'identité courante des cartes dans les fentes, s'il y en a, la compilation dans le contrôleur, d'une table de fentes enregistrant l'association des identités des cartes reçues en réponse à l'interrogation des fentes, la délivrance d'un ordre d'enroulement depuis le contrôleur à chaque carte ayant une pluralité de ports, la délivrance séquentielle depuis chaque carte ayant une pluralité de ports, de l'ordre d'enroulement délivré aux dispositifs connectés auxdits ports, la détermination dans le contrôleur, qu'un port est soit connecté à une seule unité (66) ou non connecté à une unité en fonctionnement si l'ordre d'enroulement délivré n'est pas renvoyé au contrôleur depuis ledit port, le changement dans un dispositif (48, 50, 62) qui renvoit l'ordre d'enroulement délivré, d'au moins un bit dans l'identité correspondante si ledit dispositif (48, 50) occupe une fente ou le non changement dudit au moins un bit si ledit dispositif est un dispositif à distance (62), l'interrogation séquentielle, pendant une seconde phase, des fentes par l'intermédiaire des lignes d'interrogation individuelles pour obtenir à nouveau de celles ci, les identités des cartes, la comparaison dans le contrôleur, des identités nouvellement obtenues avec les identités correspondantes obtenues précédemment enregistrées dans la table de fentes, et la détermination dans le contrôleur, des chemins couramment disponibles aux dispositifs par la fente et le port en associant ces fentes à un port correspondant lorsqu'une identité changée est détectée.

7. Le procédé de la revendication 6 dans lequel ledit ordre d'enroulement est envoyé par l'intermédiaire d'un câble de communication de bits en séries individuel à chaque carte.

8. Le procédé de la revendication 6 ou 7 dans lequel ledit ordre comprend un bit d'enroulement mais est par ailleurs similaire à un ordre envoyé à un terminal.

9. Le procédé de l'une quelconque des revendications 6, 7 ou 8 comprenant en outre l'attribution d'adresses de terminaux aux ports dans le système selon que ledit ordre d'enroulement à partir d'un port donné résulte ou non dans le changement d'un indicateur ID de carte.
